# EUROPEAN PATENT APPLICATION

(11) **EP 4 847 326 A1**
(43) Date of publication of application: **02.12.2026**
(21) Application number: 25744502.3
(22) Date of filing: 16.01.2025
(51) Int. Cl.: B60R 22/46

(54) **PRE-TENSIONING DEVICE FOR SEAT BELT RETRACTOR, AND SEAT BELT RETRACTOR**

(30) Priority: 26.01.2024 CN 202410114848
(71) Applicant: Yanfeng International Automotive Technology Co., Ltd., Shanghai 201306 (CN)
(72) Inventor: ZHANG, Lijun, Shanghai 201306 (CN); GUO, Xin, Shanghai 201306 (CN); LI, Feng, Shanghai 201306 (CN); HUANG, Yongliang, Shanghai 201306 (CN)
(74) Representative: De Bortoli, Eros
(86) International application number: PCT/CN2025/072686
(87) International publication number: WO 2025/157060

(57) **Abstract**

The present invention relates to a pretensioning device for a safety belt retractor comprising: a tube assembly (3), wherein a group of masses (3.4) are received in a tube of the tube assembly; a gas generator (3.2); and a drive wheel (2.2) coupled with a spool. The tube has an extension portion (3.1.3) at an outlet side, which surrounds the drive wheel and is open toward the drive wheel, so that the drive wheel can be driven to rotate in a first rotation direction by the masses and thereby the spool can be driven to rotate in a webbing winding direction by the drive wheel. The tube has a dodging portion (3.1.4) forming a section of a guiding path of the extension portion, wherein the dodging portion is configured such that, when the drive wheel applies a pressure load to the dodging portion through one of the masses located in an outlet region, the dodging portion can by passed by this mass, so that this mass can either be brought into engagement with the drive wheel or can be disengaged from the drive wheel. The present invention further relates to a safety belt retractor and a safety belt device. The pretensioning device can enhance an operational reliability, wherein it can avoid the jamming of the mass with the drive wheel in a secondary engagement and an operational failure brought by the jamming.

## Description

### Technical Field

The present invention relates to the safety technology field, particularly the vehicle safety technology field, and more specifically, relates to a pretensioning device for a safety belt retractor and a safety belt retractor comprising the same.

### Background of Invention

In a modern vehicle, a safety belt device is an important component of a vehicle occupant restraint system. In particular in a traffic accident, the safety belt device can provide protection for a vehicle occupant, either preventing injury or reducing injury to a minimum. With the continuous increase in the number of vehicles, users have higher and higher requirements on the safety performance of the safety belt device.

In a conventional safety belt device, prior to a vehicle collision, there exists a gap between a webbing and an occupant's body, wherein the webbing doesn't effectively conform to the occupant's body. When the vehicle collision occurs, the gap between the webbing and the occupant's body delays the time when the safety belt device effectively provides protection, thereby its protective effect is reduced.

The patent literature DE19512660A1 discloses a safety belt device which comprises a pretensioning device, wherein the pretensioning device comprises a number of masses. In a collision event, a gas generator can be activated, so that the gas generated by the gas generator drives the masses, thereby these masses drive a drive wheel coupled to a spool for winding a webbing in the safety belt retractor, so that the spool rotates in a webbing winding direction to achieve a pretensioning function of the safety belt device.

When the pretensioning function of the safety belt retractor is activated, after the webbing is pretensioned, a force exerted by an occupant on the webbing may increase continuously, and exceeds the pretensioning force since a certain time point, so that the spool rotates in a webbing extraction direction opposite to the webbing winding direction. Under a predetermined condition, a main locking function of the safety belt retractor can be triggered, thereby a further extraction of the webbing is prevented. In the case where the safety belt retractor has a force-limiting function, a force-limiting device becomes active when the force on the webbing exceeds a predetermined threshold, in order to prevent an excessive restraint force from being applied to the occupant's body, which could cause a secondary injury.

### Summary of Invention

The inventors of the present invention have discovered through research and development, a safety belt retractor with a pretensioning device in the prior art may experience an operational failure, and the inventors have identified possible reasons for the failure. When a safety belt device is worn by a vehicle occupant, a drive wheel of the pretensioning device may occupy an uncertain angular position due to various factors, which may comprise but aren't limited to different profiles of occupant bodies, different safety belt wearing operations, and manufacturing errors of the safety belt device. Furthermore, due to a collision energy, a profile of the occupant body, a manufacturing error, or any other factors, the pretensioning device may have different pretensioning strokes when it's activated. The uncertain angular position of the drive wheel and the uncertain pretensioning stroke may lead to a situation where, after the pretensioning function is activated, when the drive wheel begins to rotate in a rotation direction opposite to that in the pretensioning stage, the mass, that is either about to disengage from or has already disengaged from the drive wheel at the end of the pretensioning stage, could be reengaged with the drive wheel by the teeth of the drive wheel (also referred to as "a secondary engagement"), and subsequently this mass is driven by the drive wheel into the tube. When the secondary engagement occurs, a force exerted by the drive wheel on the mass fluctuates with the relative position between the drive wheel and the mass. In an adverse circumstance, this force may cause the jamming of the drive wheel, or even a completely dead jamming, so that the spool coupled to the drive wheel can't rotate normally in the webbing extraction direction, resulting in a malfunction of the safety belt retractor. In the case where the safety belt retractor has a force-limiting function, the force-limiting function is adversely affected by the above-mentioned jamming of the drive wheel, or even completely useless.

An object of the present invention is to provide a pretensioning device for a safety belt retractor, a safety belt retractor comprising such a pretensioning device, and a safety belt device comprising such a safety belt retractor, wherein the pretensioning device, the safety belt retractor, and the safety belt device may have an improved operation reliability, wherein the jamming of the mass with the drive wheel in the case of a secondary engagement can be prevented, and thereby an operation failure can be avoided.

According to a first aspect of the invention, a pretensioning device for a safety belt retractor is provided, the pretensioning device comprising:
a tube assembly, the tube assembly comprising a tube, in which a group of masses are received;
a gas generator, which can generate a pressure gas to drive the group of masses received in the tube when activated;
a drive wheel configured for coupling with a spool of the safety belt retractor for winding a webbing;
wherein the tube has an extension portion at an outlet side, which surrounds the drive wheel and is open toward the drive wheel, so that the masses entering from the tube into the extension portion can engage with the drive wheel, whereby the drive wheel is drivable to rotate in a first rotation direction by the masses, and thus the spool is drivable to rotate in a webbing winding direction, when the gas generator is activated;
wherein the tube has a dodging portion in an outlet region of the extension portion where the masses disengage from the drive wheel, wherein the dodging portion forms a section of a guide path of the extension portion, and the dodging portion is configured such that, when the drive wheel rotates in a second rotation direction opposite to the first rotation direction immediately after rotation in the first rotation direction, in the case where the drive wheel exerts a pressure load on the dodging portion via one of the masses located in the outlet region, the dodging portion can be passed by the mass, so that the mass can be brought into engagement with the drive wheel or disengage from the drive wheel.

When a secondary engagement occurs in the pretensioning device, wherein an adverse angular position of the drive wheel relative to one of the masses would lead to the jamming of the drive wheel with the mass in the prior art, the dodging portion is deformed under the pressure load of the mass, so that the mass can be smoothly brought into engagement with the drive wheel by the teeth of the drive wheel, or the mass can disengage from the drive wheel, and then, for example, enters a storage channel for the masses, thereby an operational failure caused by the jamming of the drive wheel with the mass during the secondary engagement can be at least substantially eliminated.

In some embodiments, a material of the dodging portion may have a lower yield strength than that of the extension portion.

In some embodiments, the extension portion of the tube may be made of steel.

In some embodiments, the tube may be made of steel.

In some embodiments, the dodging portion may be at least partially made of a light metal material, such as aluminum, magnesium, an aluminum alloy, a magnesium alloy and/or a plastic material.

In some embodiments, the dodging portion may be completely made of a plastic material. Additionally thereto, a reinforcing material such as carbon fibers or glass fibers may be added to a plastic material matrix.

In some embodiments, the dodging portion may be an injection-molded component.

In some embodiments, the dodging portion may be integrally formed. Alternatively, the dodging portion may be formed in multiple pieces.

In some embodiments, the dodging portion may be mounted to the extension portion by an interference fit.

In some embodiments, the extension portion may have an opening, in which the dodging portion is mounted.

In some embodiments, the dodging portion may be mounted in the opening by means of an interference fit. Additionally or alternatively thereto, the dodging portion may be fixed in the opening by a fastener such as a screw and/or by welding or adhesive bonding.

In some embodiments, the opening may be an elongated opening extending in a longitudinal direction of the extension portion.

In some embodiments, the opening may be a rectangular hole.

In some embodiments, the dodging portion may comprise a base received in the opening and a guiding surface connected to the base.

In some embodiments, the guiding surface may overlap with an opening edge region of the extension portion that delimits the opening.

In some embodiments, the guiding surface may have at least one of the following features:
- It extends in an arc shape in a cross section;
- It extends beyond the base at both sides in a cross section;
- It extends in a straight line in a central longitudinal section;
- It extends beyond the base at both sides in a central longitudinal section;
- It's configured symmetrically with respect to a central longitudinal section;
- An edge at an inlet side has a transitional inclined surface to the extension portion;
- An edge at an outlet side has a step to the extension portion.

In some embodiments, the base may have a plurality of interference ribs at its two opposite longitudinal sides respectively, wherein the interference ribs are squeezed by an opening edge region, so that the base is received in the opening by an interference fit.

In some embodiments, the gas generator may be mounted at an end of the tube opposite to the extension portion.

In some embodiments, a piston assembly may be provided in the tube for driving the group of masses when the gas generator is activated.

In some embodiments, an engager may be provided in the tube in front of the group of masses, wherein the engager is configured to hold the group of masses in the tube when the gas generator isn't activated, and to enter the extension portion and to engage with the drive wheel when the gas generator is activated, so that the masses following the engager and entering the extension portion have a determined angular position with respect to the drive wheel.

In some embodiments, the masses may be made of a metal material, particularly steel.

In some embodiments, the masses may be balls, ellipsoids or rollers.

In some embodiments, the group of masses may be identically formed.

In some embodiments, the pretensioning device may comprise a guide for guiding the masses away from the drive wheel in an outlet region where the masses disengage with the drive wheel.

In some embodiments, the dodging portion may be surface-treated, so that a surface of the dodging portion, that forms a section of a guiding path, has a reduced surface roughness. Additionally or alternatively thereto, the dodging portion may have a friction-reducing coating, such as a Teflon coating or a molybdenum disulfide coating.

A second aspect of the invention relates to a safety belt retractor, which comprises a frame and a spool for winding a webbing, wherein the spool is rotatably supported in the frame, wherein the safety belt retractor further comprises a pretensioning device for the safety belt retractor according to any one of the embodiments of the present invention.

In some embodiments, a force-limiting device may be integrated with the spool.

In some embodiments, the spool may comprise a spool body and a spool head that is rotatably supported at an end of the spool body, as well as a force-limiting rod, wherein the force-limiting rod is rotation-fixedly connected to the spool body at one end and to the spool head at the other end.

In some embodiments, the drive wheel may be arranged coaxially with the spool.

In some embodiments, the drive wheel may be rotation-fixedly connected to the spool.

In some embodiments, the safety belt retractor may comprise a cover fixed to a side plate of the frame, wherein the drive wheel is rotation-fixedly mounted to an end section of the spool, that extends out of the side plate, between the cover and the side plate.

In some embodiments, the safety belt retractor may have a storage channel, wherein the masses disengaging from the drive wheel can enter the storage channel when the gas generator is activated, wherein the storage channel is jointly delimited by the cover and the side plate.

In some embodiments, the safety belt retractor may be configured for a vehicle, particularly a land vehicle, such as a motor vehicle, especially a passenger vehicle. The vehicle may be driven by an internal combustion engine, a hybrid drive, or a purely electric drive.

In some embodiments, the safety belt retractor may be configured to be mounted to a vehicle body or a vehicle seat.

Other aspects of the invention may relate to a safety belt device comprising the safety belt retractor, a vehicle seat provided with the safety belt device, and a vehicle provided with the safety belt device or the vehicle seat.

Herein, "rotation-fixedly connected" may mean that two connected components can't rotate relative to each other substantially, including, but not limited to, the following examples: 1) The two components are integrally formed and therefore can rotate jointly. 2) The two components can rotate jointly through a connecting structure, for example, the two components may be connected by splines or by a non-circular hole and a shaft with a non-circular cross section. For example, the two components may be fixed to each other, or the two components may be non-rotatable relative to each other about a rotational axis while they are movable relative to each other along the rotational axis. 3) The two components are fixed to each other in a material-fit connection. For example, the two components may be welded or bonded to each other. Combinations of various connections are also possible.

Technical features mentioned above, technical features to be mentioned below, and technical features shown individually in the drawings may be combined arbitrarily, only if the combined technical features are not mutually contradictory. All possible combinations of features are technical contents disclosed herein explicitly. Any one of sub-features contained in the same sentence may be applied independently without necessarily being applied together with the other sub-features.

### Brief Description of Drawings

Now the present invention is described in more detail with reference to the accompanying drawings and exemplary embodiments. The drawings are described briefly as follows:
Fig. 1 is an exploded perspective view of a safety belt retractor according to an embodiment of the present invention.
Fig. 2 is a perspective view of a tube assembly of the safety belt retractor of Fig. 1.
Fig. 3 is a broken-out sectional view of the tube assembly of Fig. 2.
Figs. 4A to 4C are a perspective view, a cross-sectional view, and a central longitudinal sectional view of a dodging portion according to an embodiment of the present invention.
Fig. 5 is an exploded perspective view of a spool and a drive wheel of the safety belt retractor of Fig. 1.
Fig. 6 is a perspective view of an engager for a pretensioning device in an embodiment.
Fig. 7 is a perspective view of an end cover of the safety belt retractor of Fig. 1.
Figs. 8 to 11 are broken-out sectional front views of the safety belt retractor of Fig. 1 with the pretensioning device in different states.

### Embodiments

Now, exemplary embodiments are described in more detail with reference to the accompanying drawings. It would be appreciated that, for the purpose of illustration and ease of understanding, elements that are not necessary for understanding the present invention may be omitted in the drawings. Identical reference numerals may indicate the same components or components with the same function in the drawings. Numerous specific details, such as specific components, devices, and methods, are disclosed in the description to provide a thorough understanding of the disclosed embodiments. It will be apparent to a person skilled in the art, not all of these specific details are necessarily required. The exemplary embodiments should not be limitive.

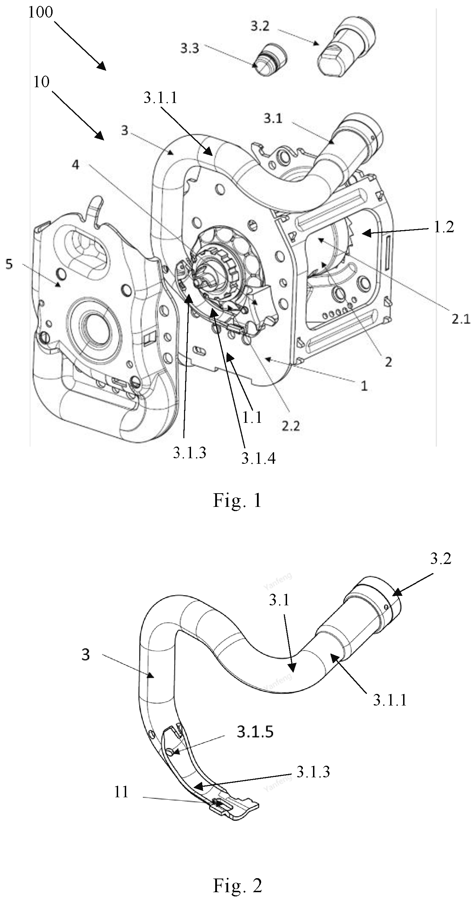

Fig. 1 is an exploded perspective view of a safety belt retractor 100 according to an exemplary embodiment of the present invention. The safety belt retractor 100 comprises a frame 1. The frame 1 is typically configured as a U-shaped frame, which may have two side plates 1.1 and 1.2. The safety belt retractor 100 may be mounted to a motor vehicle via the frame 1. For example, it may be mounted to a vehicle body of the motor vehicle or a backrest of a vehicle seat. A spool 2 is rotatably supported in the frame 1. When the spool 2 rotates in a webbing winding direction, a webbing of a safety belt device (not shown) can be wound onto the spool 2. When the spool 2 rotates in a webbing extraction direction opposite to the webbing winding direction, the webbing can be unwound from the spool 2. The spool 2 may be received in holes arranged in the two side plates 1.1 and 1.2 of the U-shaped frame 1. For example, the spool 2 can be rotatably supported in the hole of the side plate 1.1, and additionally thereto, a toothed ring may be formed in the hole of the side plate 1.2, so that a claw or a tooth of a main locking device (not shown) can lock the spool 2 when engaging with the toothed ring. An end cover (not shown) may be provided besides the side wall 1.2 axially, and the main locking device may be received in the end cover. The spool 2 may be formed in one piece or in multiple pieces. Typically, in the case where the safety belt retractor 100 has a force-limiting function, the spool 2 may be constructed in multiple pieces.

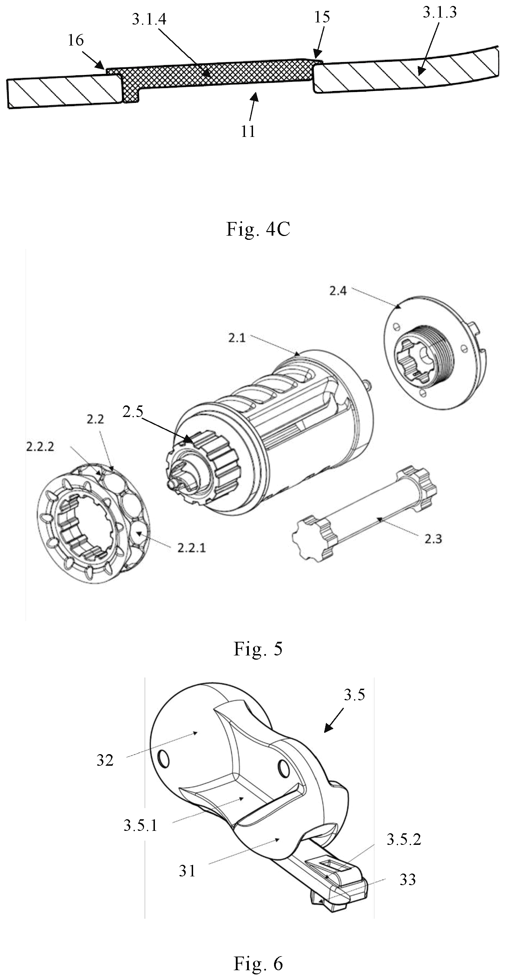

See Fig. 5. In the embodiment shown in Fig. 5, the safety belt retractor 100 has a force-limiting function. For this purpose, a force-limiting device is integrated in the spool 2. The spool 2 may comprise a spool body 2.1, which may be configured as a hollow member, wherein a spool head 2.4 is rotatably supported in a chamber of the spool body 2.1 at an open end thereof. The force-limiting device comprises a force-limiting rod 2.3, which is received in the chamber of the spool body 2.1 and is rotation-fixedly connected to the spool body 2.1 at one end and to the spool head 2.4 at the other end. As can be seen in Fig. 5, the force-limiting rod 2.3 has splines at both ends, and the spool head 2.4 also has splines in a hollow cylindrical portion extending from a disc part. Similarly, the spool body 2.1 has splines (not shown). The force-limiting rod 2.3 may fail when a predetermined torsional load is exceeded, and thus only a torsional load, which isn't higher than the predetermined torsional load, can be transmitted between the spool body 2.1 and the spool head 2.4 via the force-limiting rod 2.3. The force-limiting function for the safety belt retractor is known in the prior art in various forms.

The safety belt retractor 100 comprises a pretensioning device 10. In an exemplary application scenario, a motor vehicle is equipped with the safety belt retractor 100, wherein the pretensioning device 10 can be activated in a collision event, so that a webbing (not shown) can be pretensioned, and a gap between the webbing and an occupant's body can be eliminated, thereby an improved safety performance for the vehicle occupant can be achieved. The pretensioning device 10 may comprise a drive wheel 2.2. Herein, the drive wheel 2.2 is configured as a ball gear and has transmission grooves 2.2.1 distributed along its circumference. The transmission grooves 2.2.1 are separated from each other by ribs 2.2.2, or to say by teeth. The masses 3.4 as balls can engage with the drive wheel 2.2 in the transmission grooves 2.2.1. In the case where metal balls are used as the masses 3.4, the transmission grooves 2.2.1 may also be referred to as "ball sockets". The drive wheel 2.2 is configured for coupling with the spool 2. In the shown embodiment, the drive wheel 2.2 is arranged coaxially with the spool body 2.1 of the spool 2 and is rotation-fixedly mounted to an end section 2.5 of the spool body 2.1 opposite to the spool head 2.4.

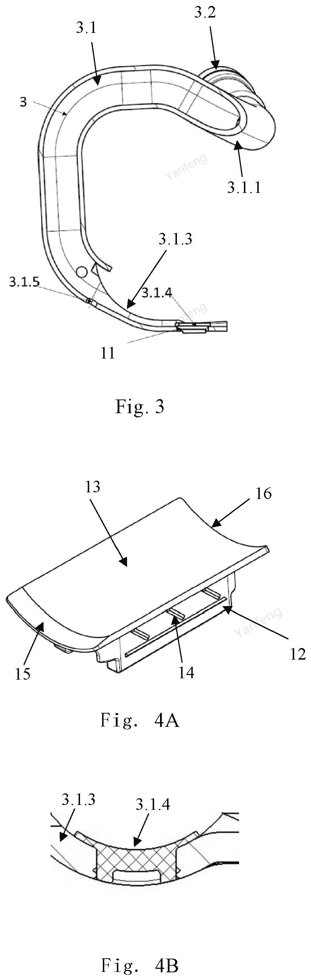

The pretensioning device 10 further comprises a tube assembly 3, which is fixedly connected to the frame 1. Fig. 2 is a perspective view of the tube assembly 3, and Fig. 3 is a broken-out sectional view of the tube assembly 3. The tube assembly 3 comprises a tube 3.1. The tube 3.1 may comprise a main portion 3.1.1 having a complete peripheral wall and an extension portion 3.1.3 having an incomplete peripheral wall, wherein the extension portion 3.1.3 surrounds the drive wheel 2.2 and is open toward the drive wheel 2.2. The tube 3.1 delimits a channel 3.1.2, along which the masses 3.4 can move sequentially. The masses 3.4 can be formed as metal balls, especially steel balls. In an alternative embodiment, ellipsoids or rollers may also be used as the masses. For the sake of simplicity, the masses 3.4 received in the tube 3.1 of the tube assembly 3 are not shown in Fig. 3. A fixed gas generator 3.2 and a movable piston assembly 3.3 are mounted at an end of the tube 3.1.

When the gas generator 3.2 is activated, for example in a vehicle collision event, the gas generator 3.2 generates a pressure gas, which can drive the piston assembly 3.3, and hence drive the group of masses 3.4 located downstream of the piston assembly 3.3 and the engager 3.5 positioned in front of the group of masses 3.4. An exemplary embodiment of the engager 3.5 is described in more detail below with reference to Fig. 6. Then, the masses 3.4 entering from the tube 3.1 (more specifically, from the main portion 3.1.1 of the tube 3.1) into the extension portion 3.1.3 can engage with the drive wheel 2.2, so that the drive wheel 2.2 rotates in a first rotation direction (in Fig. 1, in a counterclockwise direction) and thereby rotates the spool 2 in the webbing winding direction to achieve the pretensioning function of the safety belt retractor 100.

Fig. 6 is a perspective view of an exemplary embodiment of the engager 3.5. The engager per se is known in various forms in the prior art. The exemplary engager 3.5 may comprise an engager body 3.5.1 and an engager bracket 3.5.2. The engager 3.5 may be configured to hold the group of masses 3.4 in the tube 3.1 when the gas generator 3.2 isn't activated. For this purpose, the engager bracket may have a protrusion 33, and the tube 3.1 may have a mounting hole 3.1.5, in which the protrusion 33 can be held. The engager 3.5 may be configured such that, it disengages from the mounting hole 3.1.5 by means of a drive by the piston assembly 3.3 and then enters the extension portion 3.1.3 to engage with the drive wheel 2.2, when the gas generator 3.2 is activated. In this case, the masses 3.4 that follow the engager 3.5 have a definite angular position relative to the drive wheel 2.2, so that they can properly engage with the drive wheel 2.2, thereby an operation failure due to an unfavorable relative angular position can be avoided. The engager body 3.5.1 has a first ball 21 and a second ball 22. The first ball 21 is a part of a complete spherical ball which may be substantially the same as one of the masses 3.4 formed as a metal ball. The second ball 22 is a complete sphere ball and may also be substantially the same as one of the masses 3.4 formed as a metal ball. When the pretension function is initiated, a specific contour of the first ball 21 of the engager body 3.5.1 is used to adjust a relative angular position of the engager 3.5 and all of the masses 3.4 with respect to the transmission grooves 2.2.1 of the drive wheel 2.2, so that the second ball 22 of the engager 3.5 and the subsequent masses 3.4 can properly engage with the drive wheel 2.2. In the absence of the engager 3.5, the first mass entering the extension portion 3.1.3 could have an unfavorable angular position relative to the drive wheel 2.2, in which the first mass may impinge on one of the teeth of the drive wheel 2.2 and fail to properly enter one of the transmission grooves 2.2.1 of the drive wheel 2.2.

In the extension portion 3.1.3 of the tube 3.1, in an outlet region where the masses 3.4 disengages from the drive wheel 2.2, the tube 3.1 may have a dodging portion 3.1.4. The dodging portion 3.1.4 forms a section of a guide path of the extension portion 3.1.3. In an exemplary embodiment of the dodging portion 3.1.4 (see Figs. 2, 3, and 4A - 4C), the tube 3.1 may have an opening 11 in the extension portion 3.1.3, in which the dodging portion 3.1.4 may be mounted. For the purpose of showing the opening 11, the dodging portion 3.1.4 mounted in the opening 11 isn't shown in Fig. 2. The opening 11 may be an elongated opening extending in a longitudinal direction of the extension portion 3.1.3. The dodging portion 3.1.4 may be configured as an integral injection molded component, which is mounted in the opening 11 by means of an interference fit. The dodging portion 3.1.4 may comprise a base 12 and a guide surface 13 connected to the base 12. The base 12 is received in the opening 11. For example, the base 12 may have a plurality of interference ribs 14 at its two opposite longitudinal sides respectively, wherein the interference ribs are squeezed by a peripheral edge region of the opening, so that the base 12 is received in the opening 11 by means of an interference fit. The guide surface 13 overlaps the peripheral edge region delimiting the opening 11 of the extension portion 3.1.3. As can be seen in the cross-sectional view shown in Fig. 4B, the guide surface 13 extends in an arc shape in a cross-sectional view, wherein its two opposite longitudinal edges extend beyond the base 12 and abut on a surface of the extension portion 3.1.3 adjacent to the opening 11. As can be seen in a central longitudinal sectional view shown in Fig. 4C, the guide surface 13 extends substantially in a straight line, wherein an edge at its inlet side has a transitional inclined surface 15 to the extension portion 3.1.3, and an edge at its outlet side has a step 16 to the extension portion 3.1.3. The transitional inclined surface 15 may be advantageous, wherein, when the masses 3.4 are pushed from the tube 3.1 by the piston assembly 3.3, they can smoothly reach the guide surface 13 of the dodging portion 3.1.4. The step 16 may be advantageous, wherein, after the masses 3.4 have passed the dodging portion 3.1.4, they don't return to the guide surface 13 unintentionally. The material of the dodging portion 3.1.4 may have a lower yield strength than the material of the extension portion 3.1.3. For example, the whole tube 3.1 may be made of steel, while the dodging portion 3.1.4 may be made of plastic, or alternatively aluminum or magnesium.

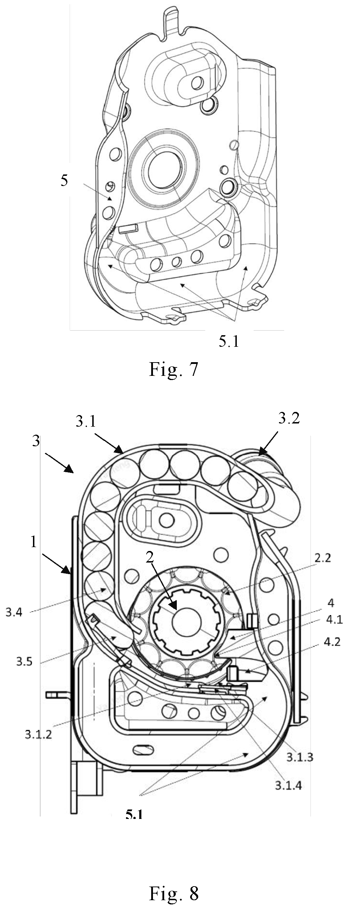

Now, with reference to Figs. 8 - 11, an operation principle of the pretensioning device according to an exemplary embodiment of the present invention is explained. Figs. 8 - 11 are broken-out sectional front views of the safety belt retractor 100 of Fig. 1 with the pretensioning device 10 in different states.

In a state shown in Fig. 8, the pretensioning device 10 isn't activated, and the group of masses 3.4 are held in the main portion 3.1.1 of the tube 3.1 by the engager 3.5.

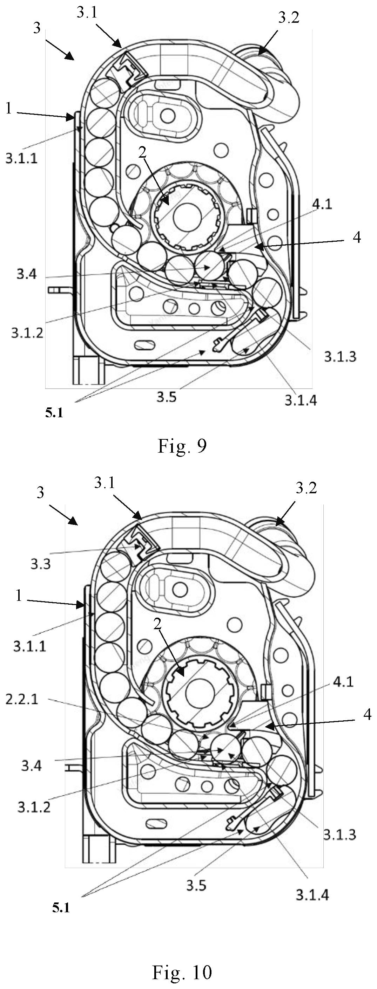

In a state shown in Fig. 9, the pretensioning device 10 is activated and a pretensioning process is about to end. At this time, the engager 3.5 and two masses 3.4 are located in the storage channel 5.1, and one mass 3.4 (hereinafter referred to as a "special mass") is in contact with the guide 4 and is about to disengage from one of the transmission groove 2.2.1 of the drive wheel 2.2. In a process from the state shown in Fig. 8 to the state shown in Fig. 9, the group of masses 3.4 and the engager 3.5 drive the drive wheel 2.2 under the drive by the piston assembly 3.3, so that the drive wheel 2.2 rotates in the first rotation direction (counterclockwise in Figs. 8 and 9), and hence the spool 2 coupled to the drive wheel 2.2 rotates in the webbing winding direction, wherein the webbing is pretensioned and the gap between the webbing and the occupant's body is eliminated.

In a state shown in Fig. 10, immediately following the pretensioning process, the drive wheel 2.2 is about to rotate in a second rotation direction opposite to the first rotation direction (clockwise in Fig. 10). At this time, the ribs 2.2.2, or to say the teeth, of the drive wheel 2.2 press the special mass. The inventors of the present invention have found that, in the prior art, an unfavorable relative angular position of the special mass with respect to the drive wheel 2.2 would cause that the drive wheel 2.2 is jammed or even completely immovable, so that the spool 2 coupled to the drive wheel 2.2 rotates inadequately in the webbing extraction direction, or even can't rotate in the webbing extraction direction, which can lead to a malfunction of the safety belt retractor. In the event of a vehicle collision, such a malfunction may be disadvantageous for the safety of the occupant.

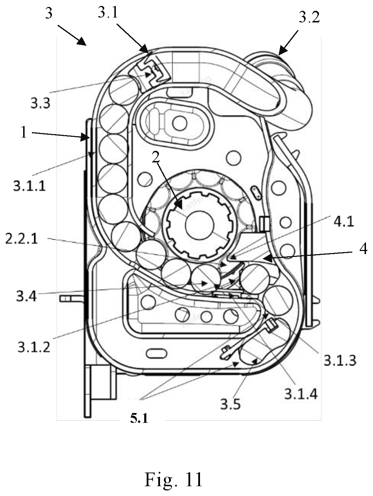

Now, by the measures of the present invention, when a secondary engagement occurs between the special mass and the drive wheel 2.2, and when the teeth of the drive wheel 2.2 press the special mass toward the dodging portion 3.1.4, the dodging portion 3.1.4 can be passed by the special mass. Thus, in a possibility, the special mass can be smoothly brought into engagement with a corresponding transmission groove 2.2.1 of the drive wheel 2.2, which is shown in Fig. 11, wherein the special mass has passed the dodging portion 3.1.4 in the reverse direction, i.e. it departs from the dodging portion 3.1.4 from the edge at the inlet side, or to say from the transitional inclined surface 15, in a direction from the edge at the outlet side to the edge at the inlet side. In another possibility, the special mass can smoothly disengage from the drive wheel 2.2 and enter the storage channel 5.1.

In summary, the dodging portion 3.1.4 is configured such that, when the drive wheel 2.2 rotates in the second rotation direction immediately after rotation in the first rotation direction, and when the drive wheel 2.2 applies a pressure load to the dodging portion 3.1.4 through one of the masses 3.4 (the special mass) in the outlet region, the dodging portion 3.1.4 can be squeezed and deformed to allow bypass of the one mass 3.4, thereby enabling the one mass 3.4 to either engage with the drive wheel 2.2 or disengage from the drive wheel 2.2.

Advantageously, the dodging portion 3.1.4 may be surface-treated, so that a surface of the dodging portion 3.1.4, that forms a section of a guide path, has a reduced surface roughness. The dodging portion 3.1.4 may have a lower friction coefficient than the extension portion 3.1.3. Alternatively or additionally thereto, the dodging portion 3.1.4 may be provided with a friction-reducing coating, such as a Teflon coating or a molybdenum disulfide coating. On one hand, the substrate of the dodging portion 3.1.4 may have a lower friction coefficient than the extension portion 3.1.3, and on the other hand, an even further reduced friction coefficient can be achieved through the coating. Due to the smooth surface of the dodging portion 3.1.4, the masses 3.4 can be easily brought into engagement with the drive wheel 2.2, or disengage from the drive wheel 2.2 and enter the storage channel 5.1, when a secondary engagement occurs.

The pretensioning device 10 may further comprise a guide 4 for guiding the masses 3.4 to leave the drive wheel 2.2 in the outlet region where the masses 3.4 disengage from the drive wheel 2.2. When one of the masses 3.4 reaches the guide 4, a guiding portion 4.1 of the guide 4 separates the mass 3.4 from the transmission groove 2.2.1 of the drive wheel 2.2 and directs it into a connecting channel 4.2, so that this mass 3.4 reliably enters the storage channel 5.1.

The safety belt retractor 100 may further comprise a cover 5, which is fixed to the side plate 1.1 of the frame 1, wherein the drive wheel 2.2 is rotation-fixedly mounted to an end section 2.5 of the spool 2, that extends out of the side plate 1.1, between the cover 5 and the side plate 1.1. The storage channel 5.1 is jointly delimited by the cover 5 and the side plate 1.1.

It should be noted that, the terms used here are only for the purpose of explaining specific aspects, not for limiting the disclosure. As used herein, the singular forms "a" and "the" shall include plural forms, unless otherwise specifically stated in the context. It may be understood that the terms "comprising", "including" and other similar terms, when used in the application documents, specifically explain the presence of the stated operations, elements and/or components, but do not exclude the presence or addition of one or more other operations, elements, components, and/or their combinations. The term "and/or" as used herein includes all random combinations of one or more related items as listed. In the description of the accompanying drawings, similar reference signs always indicate similar elements.

The thickness of the elements in the accompanying drawings may be exaggerated for the sake of clarity. In addition, it may be understood that, if one element is referred to as being formed on, coupled to, or connected to another element, then the one element may be directly formed on, coupled to, or connected to another element, or there may be one or more intervening elements among them. On the contrary, if the expressions "directly formed on", "directly coupled to" and "directly connected to" are used here, it means that there are no intervening elements. Other phases intended to explain the relationship between elements should be interpreted similarly, such as "between" and "directly between", "attached" and "directly attached", "adjacent" and "directly adjacent" and so on.

The terms such as "top", "bottom", "above", "below", "over" and "under" herein are intended to describe a relationship of one element, layer or area as shown in the accompanying drawings relative to another component, layer or area. It may be understood that, in addition to the orientations described in the accompanying drawings, these terms should also include other orientations of the device.

It may be understood that, although the terms such as "first", and "second" may be used here to describe different elements, these elements should not be limited by these terms. These terms are only intended to distinguish one element from another element. Therefore, the first element may be referred to as the second element without departing from the teaching of the concept according to the present invention.

It is also conceivable, all the exemplary embodiments disclosed herein may be combined with each other arbitrarily. Finally, it should be noted that the above embodiments are provided solely for the purpose of understanding the invention and do not limit the protection scope of the present application. A person skilled in the art can make modifications based on the above embodiments without departing from the protection scope of the present application.

## Claims

1. A pretensioning device for a safety belt retractor, the pretensioning device comprising:
a tube assembly (3), wherein the tube assembly comprises a tube (3.1), in which a group of masses (3.4) are received;
a gas generator (3.2), which can generate a pressure gas to drive the group of masses received in the tube when activated; and
a drive wheel (2.2), which is configured for coupling with a spool (2) of the safety belt retractor for winding a webbing;
wherein the tube (3.1) has an extension portion (3.1.3) at an outlet side, wherein the extension portion surrounds the drive wheel and is open toward the drive wheel, so that the masses entering the extension portion from the tube can engage with the drive wheel when the gas generator is activated, so that the drive wheel is drivable to rotate in a first rotation direction by the masses, and hence the spool is drivable to rotate in a webbing winding direction by the drive wheel;
**characterized in that** the tube (3.1) has a dodging portion (3.1.4) in the extension portion (3.1.3) in an outlet region where the group of masses (3.4) disengage from the drive wheel (2.2), wherein the dodging portion forms a section of a guiding path of the extension portion, wherein the dodging portion is configured such that, when the drive wheel rotates in a second rotation direction opposite to the first rotation direction immediately after rotation in the first rotation direction, and when the drive wheel applies a pressure load to the dodging portion via one of the masses, which is located in the outlet region, the dodging portion can be passed by this mass, so that this mass can be brought into engagement with the drive wheel or disengage from the drive wheel.

2. The pretensioning device for the safety belt retractor according to claim 1, **characterized in that** a material of the dodging portion (3.1.4) has a lower yield strength than that of the extension portion (3.1.3).

3. The pretensioning device for the safety belt retractor according to claim 1 or 2, **characterized in that** the tube (3.1) is made of steel, and the dodging portion (3.1.4) is at least partially made of a light metal material and/or a plastic material.

4. The pretensioning device for the safety belt retractor according to any one of claims 1 to 3, **characterized in that** the extension portion (3.1.3) has an opening (11), and the dodging portion (3.1.4) is mounted in the opening.

5. The pretensioning device for the safety belt retractor according to claim 4, **characterized in that** the opening (11) is an elongated opening extending in a longitudinal direction of the extension portion (3.1.3).

6. The pretensioning device for the safety belt retractor according to claim 4 or 5, **characterized in that** the dodging portion (3.1.4) has at least one of the following features: the dodging portion
- is an injection-molded component;
- is integrally formed;
- is mounted in the opening in an interference fit.

7. The pretensioning device for the safety belt retractor according to any one of claims 4 to 6, **characterized in that** the dodging portion (3.1.4) comprises a base (12) received in the opening (11) and a guiding surface (13) connected to the base, wherein the guiding surface overlaps with an edge region of the opening that delimits the opening of the extension portion.

8. The pretensioning device for the safety belt retractor according to claim 7, **characterized in that** the guiding surface (13) has at least one of the following features: the guiding surface
- extends in an arc shape in a cross section;
- extends beyond the base at both sides in a cross section;
- extends in a straight line in a central longitudinal cross section;
- extends beyond the base at both sides in a central longitudinal cross section;
- is symmetrically configured about a central longitudinal plane;
- has a transitional inclined surface (15) from its edge at an inlet side to the extension portion; and
- has a step (16) from its edge at an outlet side to the extension portion.

9. The pretensioning device for the safety belt retractor according to claim 7 or 8, **characterized in that** the base (12) has a plurality of interference ribs (14) at two opposite longitudinal sides respectively, wherein the interference ribs are squeezed by an edge region of the opening, so that the base is received in the opening in an interference fit.

10. The pretensioning device for the safety belt retractor according to any one of claims 1 to 9, **characterized in that**,
the gas generator (3.2) is mounted at an end of the tube (3.1) opposite to the extension portion; and/or
a piston assembly (3.3) is provided in the tube (3.1) for driving the group of masses when the gas generator is activated; and/or
an engager (3.5) is provided in the tube (3.1) in front of the group of masses, wherein the engager is configured to hold the group of masses in the tube when the gas generator isn't activated, and to enter the extension portion and to engage with the drive wheel when the gas generator is activated, so that the masses following the engager and entering the extension portion have a determined angular position relative to the drive wheel.

11. The pretensioning device for the safety belt retractor according to any one of claims 1 to 10, **characterized in that** the masses are balls, ellipsoids, or rollers made of metal.

12. The pretensioning device for the safety belt retractor according to any one of claims 1 to 11, **characterized in that** the pretensioning device (10) comprises a guide (4) for guiding the masses to depart from the drive wheel in an outlet region where the masses disengage from the drive wheel.

13. The pretensioning device for the safety belt retractor according to any one of claims 1 to 12, **characterized in that** the dodging portion (3.1.4) is surface-treated, so that a surface of the dodging portion, that forms a section of a guiding path, has a reduced surface roughness; and/or the dodging portion (3.1.4) has a friction-reducing coating.

14. The pretensioning device for the safety belt retractor according to any one of claims 1 to 13, **characterized in that** the drive wheel is arranged coaxially with the spool and is rotation-fixedly connected thereto.

15. A safety belt retractor comprising a frame (1) and a spool (2) for winding a webbing, wherein the spool is rotatably supported in the frame, **characterized in that** the safety belt retractor further comprises the pretensioning device for the safety belt retractor according to any one of claims 1 to 14.

16. The safety belt retractor according to claim 15, **characterized in that** a force-limiting device is integrated in the spool.

17. The safety belt retractor according to claim 16, **characterized in that** the spool (2) comprises a spool body (2.1), a spool head (2.4) rotatably supported at an end of the spool body, and a force-limiting rod (2.3), wherein the force-limiting rod is rotation-fixedly connected to the spool body at one end and to the spool head at the other end.

18. The safety belt retractor according to any one of claims 15 to 17, **characterized in that** the safety belt retractor comprises a cover (5), which is fixed to a side plate (1.1) of the frame, wherein the drive wheel (2.2) is rotation-fixedly mounted to an end section (2.5) of the spool, which extends out of the side plate, between the cover and the side plate.

19. The safety belt retractor according to claim 18, **characterized in that** the safety belt retractor has a storage channel (5.1), wherein, the masses, which disengage from the drive wheel when the gas generator is activated, can enter the storage channel, wherein the storage channel is jointly delimited by the cover and the side plate.

20. The safety belt retractor according to any one of claims 15 to 19, **characterized in that** the safety belt retractor is configured for a motor vehicle.

21. A safety belt device comprising a webbing, **characterized in that** the safety belt device comprises the safety belt retractor according to any one of claims 15 to 20.
